## Europäisches Patentamt
## European Patent Office
## Office européen des brevets

(11) Veröffentlichungsnummer: **0 309 977**
**A2**

(19)

(12) # EUROPÄISCHE PATENTANMELDUNG

(21) Anmeldenummer: 88115854.7

(22) Anmeldetag: 27.09.88

(51) Int. Cl.4: **A21C 3/04 , A21C 11/18**

(30) Priorität: 02.10.87 DE 3733325

(43) Veröffentlichungstag der Anmeldung:
05.04.89 Patentblatt 89/14

(84) Benannte Vertragsstaaten:
**AT BE CH DE ES FR GB IT LI NL SE**

(71) Anmelder: **CORONET-WERKE Heinrich Schlerf GmbH**

**D-6948 Wald-Michelbach/Odw.(DE)**

(72) Erfinder: **Weihrauch, Georg**
**Am Rossert 1**
**D-6948 Wald-Michelbach/Odw(DE)**

(74) Vertreter: **Dr.-Ing. Hans Lichti Dipl.-Ing. Heiner Lichti Dipl.-Phys. Dr. Jost Lempert Postfach 41 07 60 Durlacher Strasse 31 D-7500 Karlsruhe 41(DE)**

(54) **Vorrichtung zur portionsweisen Abgabe pastöser Massen, z.B. Gebäckteig.**

(57) Eine Vorrichtung zur portionsweisen Abgabe von pastösen Massen, z. B. von Teig zur Herstellung von Gebäck, besteht aus einem zylindrischen Gehäuse mit einem Mundstück am unteren Ende, einem im Gehäuse schrittweise verschieblichen Kolben mit einer das Gehäuse an der oberen Stirnseite durchgreifenden Kolbenstange mit wenigstens einer Zahnleiste, einem im Bereich der oberen Stirnseite des Gehäuses an einer horizontalen Achse schwenkbar gelagerten, die Kolbenstange mit einem Gabelkopf umgreifenden Stoßhebel, einer von diesem betätigten, in die Zahnleiste federnd eingreifenden Schubklinke und einer am Gehäuse angeordneten Rücklaufsperre für die Kolbenstange. Eine in fertigungs-, montage- und anwendungstechnischer Hinsicht besonders einfache Ausführung ergibt sich dadurch, daß der aus Kunststoff bestehende Stoßhebel an den beiden Schenkeln des Gabelkopfs je einen einstückig angeformten, nach außen weisenden Lagerzapfen aufweist, die beide in je eine Lageröffnung des Gehäuses eingreifen und nach Einsetzen der Kolbenstange zwischen die Gabelschenkel in ihrer Lagerposition gehalten sind.

EP 0 309 977 A2

## Vorrichtung zur portionsweisen Abgabe pastöser Massen, z. B. Gebäckteig

Die Erfindung betrifft eine Vorrichtung zur portionsweisen Abgabe von pastösen Massen, z. B. von Teig zur Herstellung von Gebäck, bestehend aus einem zylindrischen Gehäuse mit einem Mundstück am unteren Ende, einem im Gehäuse schrittweise verschieblichen Kolben mit einer das Gehäuse an der oberen Stirnseite durchgreifenden Kolbenstange mit wenigstens einer Zahnleiste, einem im Bereich der oberen Stirnseite des Gehäuses an einer horizontalen Achse schwenkbar gelagerten, die Kolbenstange mit einem Gabelkopf umgreifenden Stoßhebel, einer von diesem betätigten, in die Zahnleiste federnd eingreifenden Schubklinke und einer am Gehäuse angeordneten Rücklaufsperre für die Kolbenstange.

Vorrichtungen der vorgenannten Art sind in einer Vielzahl von Ausführungsformen bekannt (DE-PS 32 15 362 und 958 011, DE-GM 82 29 452, CH-PS 184 284) und dienen in erster Linie im Haushalt zur Herstellung von Kleingebäck. Die Arbeits weise ist folgende: Der vorbereitete Teig wird von einer offenen Seite in das Gehäuse eingedrückt und mittels des Kolbens, der Kolbenstange und dem Stoßhebel durch das Mundstück herausgepreßt, wobei das Mundstück verschieden geformte und unterschiedlich angeordnete Austrittsöffnungen aufweisen kann, so daß Gebäckstücke mit unterschiedlicher Oberflächenstruktur bzw. Oberflächenzeichnung entstehen.

Der Antrieb des Kolbens über die Kolbenstange und die Schubklinke erfolgt nach Art eines Schrittschaltwerks, indem die Schubklinke in einem Zahn der Zahnleiste federnd eingreift, und die Kolbenstange unter Wirkung des auf den Stoßhebel ausgeübten Drucks um ein bestimmtes Maß nach unten drückt. Der Hub kann dabei entweder durch Begrenzung des Schwenkwinkels des Stoßhebels auf ein bestimmtes Maß beschränkt werden, so daß stets nur eine vorbestimmte Menge an Teig austritt. Um nach der Hubbewegung bei Rückführen des Stoßhebels und der Schubklinke, die dabei aufgrund ihrer federnden Lagerung über die Zähne der Zahnleiste hinwegrutscht, zu verhindern, ist am Gehäuse eine Rücklaufsperre angebracht, an der die Zahnleiste vorbeiläuft und die am Ende des Hubs in den ihr gegenüberliegenden Zahn einfällt. Auch sie ist in der Regel federnd gelagert.

Für das Arbeiten mit derartigen Vorrichtungen kommt es maßgeblich auf einen einfachen Aufbau an, um dem Benutzer die Handhabung so leicht als möglich zu machen. Dies gilt zum einen für das Füllen der Vorrichtung mit dem Teig, da hierzu die Kolbenstange mit dem Kolben in die Ausgangslage zurückgeführt und das Gehäuse geöffnet werden muß. Ferner muß die Vorrichtung in allen Teilen demontierbar sein, um sie nach der Benutzung komplett reinigen zu können. Um das Demontieren und anschließende Zusammensetzen der Vorrichtung so einfach als möglich zu gestalten, sollte die Vorrichtung aus möglichst wenig Einzelteilen bestehen, deren Zusammen wirkung außerdem für den technischen Laien leicht überschaubar sein sollte.

Einige der bekannten Vorrichtungen (DE-PS 958 011, DE-GM 82 29 452 und CH-PS 184 284) bestehen aus einer Vielzahl von Bauteilen, die sich überhaupt nicht oder nur mit großem Aufwand und technischer Kenntnis auseinandernehmen und zusammenbauen lassen. Bei diesen Vorrichtungen beschränkt sich daher die Reinigungsmöglichkeit auf das Gehäuse und den Kolben, was in hygienischer Hinsicht als unbefriedigend gelten muß, da praktisch alle Bauteile mit der verderblichen pastösen Masse, sei es nun Teig oder Cremes, in Berührung kommen.

Die im Aufbau einfachste Vorrichtung (DE-PS 32 15 362) weist an der dem aufschraubbaren Mundstück gegenüberliegenden Stirnseite des Gehäuses einen Verschlußdeckel mit einem zentralen Loch auf, durch den die Kolbenstange hindurchgreift. Zwischen dem Verschlußdeckel und dem Gehäuse ist ein Ring eingelegt, der nach innenragende Nasen als Rücklaufsperren aufweist. Der Stoßhebel umgreift mit einer gabelförmigen Ausbildung das nach außen vorragende Ende der Kolbenstange und ist mittels gesonderter Lagerbolzen um eine horizontale Achse schwenkbar im Deckel gelagert. Die Kolbenstange ist mit zwei diametral angeordneten Zahnleisten versehen, in die zu beiden Seiten der Kolbenstange angeordnete Schubklinken eingreifen. Diese Schubklinken können in einer Ausführung dieser bekannten Vorrichtung mit den Gabelschenkeln einstückig sein. Die Kolbenstange ist in versetzter Anordnung zu den Zahnleisten mit Abflachungen versehen, um sie nach Verdrehen um ihre eigene Achse problemlos in ihre Ausgangslage zurückführen zu können, da dann die Schubklinken und die Rücklaufsperren, die im übrigen auch an diametralen Seiten vorgesehen sind, außer Eingriff mit der Zahnleiste kommen. Auch diese Vorrichtung besteht noch aus einer relativ großen Anzahl von Bauteilen.

Der Erfindung liegt die Aufgabe zugrunde, die Anzahl der notwendigen Bauteile zu verringern und damit die Vorrichtung in fertigungs-, montage- und anwendungstechnischer Hinsicht zu vereinfachen und demzufolge zu verbilligen. Ferner soll die Vorrichtung benutzerfreundlicher und in ihren Einsatzmöglichkeiten vielfältiger ausgestaltet werden.

Diese Aufgabe wird erfindungsgemäß dadurch gelöst, daß der aus Kunststoff bestehende Stoßhebel an den beiden Schenkeln des Gabelkopfs je einen einstückig angeformten, nach außen weisenden Lagerzapfen aufweist, die beide in je eine Lageröffnung des Gehäuses eingreifen und nach Einsetzen der Kolbenstange zwischen die Gabelschenkel in ihrer Lagerposition gehalten sind.

Mit der erfindungsgemäßen Ausbildung entfallen zunächst gesonderte Lagerteile für den Stoßhebel, indem die Lagerzapfen unmittelbar an den Gabelschenkeln angeformt und ferner die Lageröffnungen unmittelbar am Gehäuse angeordnet sind. Durch die Ausbildung des Stoßhebels aus Kunststoff - wie im übrigen auch das Gehäuse vorzugsweise aus Kunststoff besteht -können die Gabelschenkel geringfügig federn und beim Einsetzen des Stoßhebels in das Gehäuse zunächst etwas zurückweichen, bis die Lagerzapfen in die Lageröffnungen am Gehäuse einschnappen. Dadurch, daß die Lagerzapfen nach außen weisen, werden sie nach Einsetzen der Kolbenstange zwischen die Gabelschenkel in ihrer axialen Position gesichert, können also nicht nach innen ausweichen. Zugleich wird gegenüber der bekannten Vorrichtung ein gesonderter Verschlußdeckel zur Lagerung des Stoßhebels vermieden. Es reicht vielmehr aus, das Gehäuse im Bereich der oberen Stirnseite abweichend von der im übrigen zylindrischen Form so auszugestalten, daß es die notwendige Funktion für die Lagerung des Stoßhebels und den Durchgriff der Kolbenstange erfüllt. Hierzu kann das Gehäuse am oberen Ende etwa auf den Durchmesser der Kolbenstange eingezogen werden, wobei es an einer Seite eine Öffnung für den Eingriff des Stoßhebels mit dem Gabelkopf aufweist, die diesem eine ausreichende Bewegungsfreiheit läßt. Im übrigen ist ein Verschluß auch funktionell entbehrlich, denn der in das Gehäuse eingefüllte Teig wird nach oben ohnehin durch den Kolben abgedeckt.

In vorteilhafter Ausgestaltung weist der aus Kunststoff bestehende Stoßhebel wenigstens eine einstückig angeformte Schubklinke auf, die in den von dem Gabelkopf des Stoßhebels umgrenzten Freiraum hineinragt. Durch die einstückige Anformung der Schubklinke bildet diese zusammen mit dem Stoßhebel ein einziges Bauteil. Sie ist dabei so angeformt, daß sie selbsttätig federt und in die Zahnleiste an der Kolbenstange einrasten kann. Vorzugsweise ist dabei nur eine Zahnleiste vorgesehen, die an der dem Stoßhebel zugekehrten Seite der Kolbenstange ausgebildet ist.

Bei der vorgenannten Ausführungsform ist die Schubklinke an dem Stoßhebel zwischen den beiden Gabelschenkeln angeformt und als schräg nach unten weisende Federnase ausgebildet, so daß die am Stoßhebel wirkende Kraft nach unten gerichtet ist und die Schubklinke beim Vorschub im wesentlichen nur auf Druck beansprucht ist, andererseits beim Rückholen des Stoßhebels über die Zahnleiste ohne Kraftübertragung auf diese hinweggrutschen kann.

In anderer Ausgestaltung kann an der Innenseite jedes Gabelschenkels eine Schubklinke angeformt sein, wobei dann die Kolbenstange zwei diametral angeordnete Zahnleisten aufweist, in die die beiden Schubklinken eingreifen.

Bei dieser Ausführungsform ist vorzugsweise vorgesehen, daß die federnden Gabelschenkel in ihren Schwenklagern ein ausreichendes Axialspiel aufweisen, um beim Rückführen des Stoßhebels die Schubklinken über die Zahnleisten gleiten zu lassen.

Eine weitere Verringerung der Bauteile läßt sich erfindungsgemäß dadurch erreichen, daß die Rücklaufsperre als am Gehäuse einstückig angeformte Nase ausgebildet ist. Diese Nase wird mit Vorteil im Bereich der Öffnung des Gehäuses für den Durchtritt der Kolbenstange angeformt. Dabei ist das Gehäuse im Bereich dieser Rücklaufsperre so gestaltet, daß die Nase gleichfalls federnd nachgibt und beim Arbeitshub über die sie passierenden Zähne der Zahnleiste hinweggrutschen kann.

Wie an sich bekannt, ist die Kolbenstange um ihre Achse verdrehbar, um die Zahnleiste bzw. die Zahnleisten mit der Schubklinke und der Rücklaufsperre außer Eingriff bringen zu können und die Kolbenstange nach Auspressen des Teigs in ihre Ausgangslage zurückführen zu können. Hierbei können ferner - wie beim Stand der Technik - an der Kolbenstange versetzt zu der Zahnleiste bzw. den Zahnleisten Abflachungen vorgesehen sein.

Wie ferner bei einer anderen Vorrichtung bekannt (DE-PS 958 011) kann die Kolbenstange zwei oder mehr Zahnleisten mit unterschiedlicher Zahnteilung aufweisen. Damit ist es möglich, die abgegebene Teigportion pro Arbeitsschub zu verändern, nämlich bei Einstellung der Zahnleiste mit größerer Zahnteilung zu vergrößern bzw. bei Einstellung der Zahnleisten mit kleinerer Zahnteilung zu verkleinern. Das Umstellen kann durch ein einfaches Verdrehen der Kolbenstange geschehen. Selbstverständlich kann die abgegebene Teigportion auch bei einer Zahnleiste kleiner Zahnteilung variiert werden, indem beim Rückführen des Stoßhebels auf das Rastgeräusch der Schubklinke geachtet wird und der Stoßhebel beispielsweise nur um jeweils einen Zahn oder mehrere Zähne zurückgeführt wird.

Um bei mehreren Zahnleisten die auf die Schubklinke eingestellte Zahnleiste in der Arbeitslage zu halten, weist das Gehäuse eine achsparallele Führung für die Kolbenstange auf, die zugleich als Drehsicherung für die Kolbenstange ausgebildet ist. Diese Führung ist in einfachster Ausführung aus einer an der Kolbenstange angeordneten achsparallelen Rippe und einer am Gehäuse im Bereich deren oberer Stirnseite angeordneten Nut gebildet. Dabei braucht die Eingriffstiefe der Rippe nur relativ gering sein, da auf die Kolbenstange nur sehr kleine Verdrehkräfte einwirken können. Aufgrund der geringen Eingriffstiefe läßt sich die Kolbenstange von Hand gleichwohl relativ leicht verdrehen, sei es, um den Kolben zurückzuführen oder eine andere Zahnleiste in die Betriebslage einzustellen. Weist die Kolbenstange mehrere Zahnleisten auf, so· ist zweckmäßigerweise jeder Zahnleiste eine solche Führung zugeordnet.

In weiterer vorteilhafter Ausgestaltung ist vorgesehen, daß die Lagerzapfen in der oberen Stellung des Stoßhebels durch Einfedern der Gabelschenkel und/oder durch Ausfedern der Wandung des Gehäuses aus den Lageröffnungen ausrastbar sind und der Stoßhebel vom Gehäuse lösbar ist.

Mit dieser Ausbildung ist das Montieren und Demontieren des Stoßhebels besonders einfach und kann auch vom Benutzer vorgenommen werden, beispielsweise zu Reinigungszwecken. Auch ist die Vorrichtung bei demontiertem Stoßhebel weniger sperrig und läßt sich raumgünstiger verpakken und lagern.

Die vorgenannte Ausführungsform gibt weiterhin die Möglichkeit, daß nach Lösen des Stoßhebels vom Gehäuse die Vorrichtung als Garnierspritze verwendbar ist. Die in ihrer normalen Ausstattung als Gebäckpresse dienende Vorrichtung läßt sich somit durch einfache Handgriffe in ein anderes Arbeitsgerät umwandeln. Das Auspressen der Garniermasse kann entweder mit der vorhandenen Kolbenstange, gegebenenfalls nach Aufsetzen einer tellerförmigen Handhabe, oder mittels eines anderen Kolbens, der in das Gehäuse eingesetzt wird, erfolgen.

Vorzugsweise ist die Kolbenstange als Kunststoffrohr relativ großen Durchmessers ausgebildet, wodurch sie einerseits eine ausreichende Stabilität erhält, andererseits die Anordnung von zwei oder mehr Zahnleisten problemlos möglich ist.

In weiterer vorteilhafter Ausgestaltung der Erfindung ist vorgesehen, daß das Mundstück als kurzes zylindrisches Bauteil ausgebildet ist und mehrere zum Innenraum des Gehäuses offene Kammern aufweist, von denen eine im Zentrum angeordnete Kammer die Austrittsöffnungen für die im Gehäuse untergebrachte pastöse Masse aufweist, während die um die zentrale Kammer angeordneten weiteren Kammern zur Aufnahme von Massen anderer Farbe oder anderer Art dienen und entweder über Queröffnungen mit der zentralen Kammer verbunden sind oder unmittelbar nach außen weisende Austrittsöffnungen aufweisen.

Während durch die zentrale Kammer und die dort angeordneten ein oder mehr Austrittsöffnungen die Hauptmasse austritt, wird die in den anderen Kammern befindliche Masse aufgrund des auch auf sie einwirkenden Drucks des Kolbens entweder durch die Queröffnungen in die zentrale Kammer hineingedrückt und dort der Hauptmasse zugegeben. Wird beispielsweise in die seitlichen Kammern ein Teig anderer Farbe als in das Gehäuse eingegeben, so ist das ausgepreßte Gebäckstück verschiedenfarbig ausgebildet. Dabei ist durch entsprechende Formgebung und Dimensionierung der Queröffnungen, wie auch durch entsprechende Ausbildung und Anordnung der Austrittsöffnungen eine vielfältige Dekorationsmöglichkeit gegeben. Statt dessen können die seitlichen Kammern auch direkte Austrittsöffnungen aufweisen, so daß die Massen nebeneinander austreten und beim Auspressen beispielsweise auf ein Blech ineinander übergehen bzw. zusammenlaufen.

Wird die Vorrichtung, wie zuvor erwähnt, ohne den Stoßhebel als Garnierpresse verwendet, so kann an dem Gehäuse statt des Mundstücks eine Garnierdüse oder aber an dem Mundstück selbst eine an dessen Austrittsöffnung(en) anschließende Garnierdüse befestigbar sein. Im letztgenannten Fall kann bei Verwendung eines mehrkammerigen Mundstücks auch das Garnieren mit Massen unterschiedlicher Art oder Farbe vorgenommen werden.

Nachstehend ist die Erfindung anhand von in der Zeichnung wiedergegebenen Ausführungsbeispielen erläutert. In der Zeichnung zeigen:

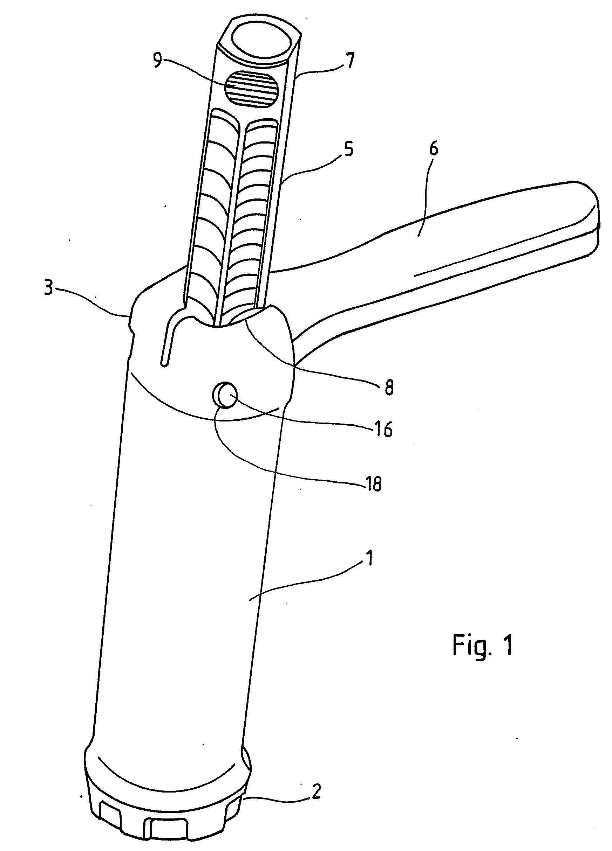

Figur 1 eine perspektivische Ansicht der Vorrichtung;

Figur 2 einen Längsschnitt einer Ausführungsform der Vorrichtung;

Figur 3 eine Draufsicht auf die Ausführungsform gemäß Figur 2;

Figur 4 einen Längsschnitt einer anderen Ausführungsform;

Figur 5 eine Draufsicht zu der Darstellung gemäß Figur 4;

Figur 6 einen Längsschnitt einer abgewandelten Ausführung im Bereich des Mundstücks;

Figur 7 eine Draufsicht zu der Darstellung gemäß Figur 6;

Figur 8 einen Schnitt des oberen Teils der Vorrichtung in einer anderen Ausführung;

Figur 9 eine teils geschnittene Draufsicht auf die Ausführungsform gemäß Figur 8 und

Figur 10 ein Mundstück mit einer Garnierdüse im Schnitt.

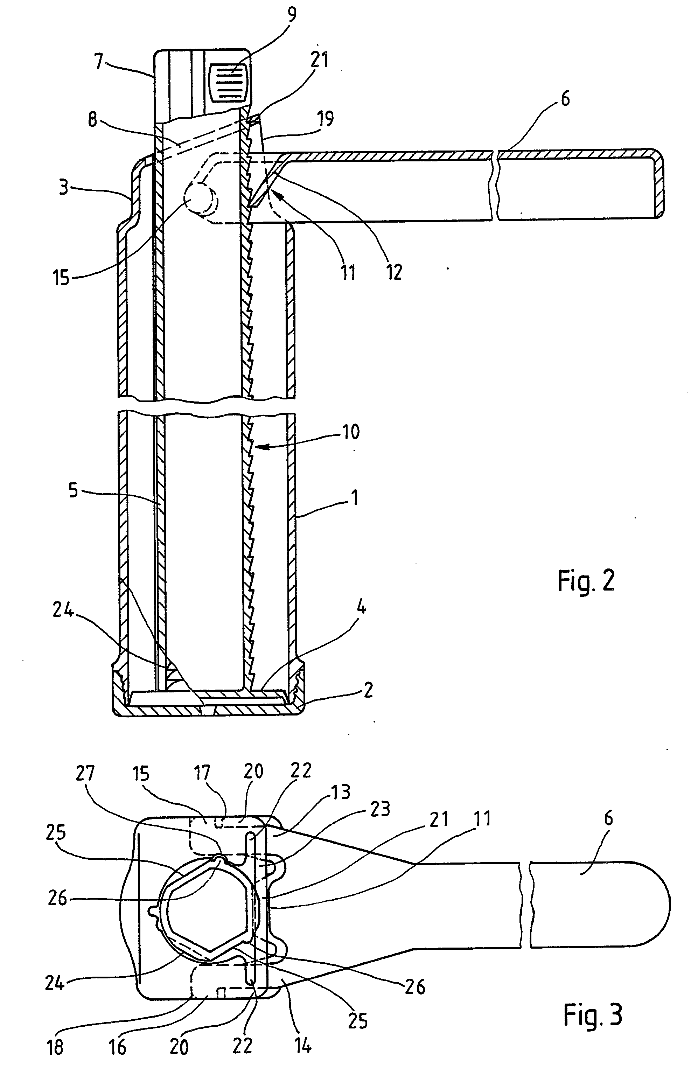

Die in den Zeichnungen wiedergegebene Vorrichtung zur Herstellung von Kleingebäck weist ein zylindrisches Gehäuse 1 auf, das an seiner unteren Stirnseite durch ein aufgeschraubtes oder aufgeprelltes Mundstück 2 verschlossen ist und das am oberen Ende 3 nach innen eingezogen ist. In dem Gehäuse 1 ist ein Kolben 4 (siehe Figur 2) geführt, der über eine Kolbenstange 5 mittels eines Stoßhebels 6 antreibbar ist.

. Die Kolbenstange 5 durchgreift mit ihrem oberen Ende 7 den oberen Abschluß 3 des Gehäuses 1 durch eine Öffnung 8. Sie kann an ihrem oberen Ende 7 an gegenüberliegenden Seiten eine Griffmulde 9 zum Verdrehen um ihre eigene Achse aufweisen. An der aus einem Kunststoffrohr gebildeten Kolbenstange, an der der Kolben 4 einstückig angeformt ist, ist wenigstens eine Zahnleiste 16 mit Sägezahnprofil angeordnet, wobei die schrägen Zahnflanken nach oben weisen.

Bei dem Ausführungsbeispiel gemäß Figur 2 und 3 wirkt mit der einen Zahnleiste 10 eine Schubklinke 11 zusammen, die an dem Stoßhebel 6 angeformt und nach Art einer Federnase 12 ausgebildet ist. Der Stoßhebel 6 weist in seinem behälternahen Bereich einen Gabelkopf mit zwei Gabelschenkeln 13, 14 auf, wobei die Federnase 12 zwischen den beiden Gabelschenkeln 13, 14 etwa in der Längsachse des Stoßhebels 6 angeordnet ist. An den freien Enden der Gabelschenkel 13, 14 sind nach außen weisende Lagerzapfen 15, 16 angeformt, die in Lageröffnungen 17, 18 im oberen Abschluß 3 des Gehäuses eingreifen. Der obere Abschluß 3 des Gehäuses weist auf seiner dem Stoßhebel 6 zugekehrten Seite eine breite Öffnung 19 auf, durch die der Stoßhebel eingeführt werden kann, wobei die Lagerzapfen 15, 16 mit ihrer äußeren Stirnseite an der dort im wesentlichen geradlinigen Wandung 20 des Gehäuses 1 entlanggleiten, bis die Lagerzapfen 15, 16 schließlich in die Lageröffnungen 17, 18 einrasten. Nach Einsetzen der Kolbenstange 5, das bei abgenommenem Mundstück 2 von unten her erfolgt, werden die Lagerzapfen 15, 16 in ihrer Position gehalten.

Am oberen Abschluß 3 des Gehäuses 1 ist oberhalb des Stoßhebels 6 eine Rücklaufsperre 21 angeordnet, die gleichfalls in die Zahnleiste 10 eingreift und beim Anheben des Stoßhebels 6 aus der in Figur 2 gezeigten Endstellung nach Auspressen eines Gebäckstücks eine Mitnahme der Kolbenstange 5 durch die Schubklinke 11 verhindert. Auch die Rücklaufsperre 21 ist federnd ausgebildet, um bei der Bewegung der Kolbenstange 5 nach unten über die Zahnleiste 10 hinwegrutschen zu können. Zu diesem Zweck ist beim gezeigten Ausführungsbeispiel die im wesentlichen kreisförmige Öffnung 8 im oberen Abschluß 3 des Gehäuses 1 an ihrer einen Seite zu nach beiden Seiten vorlaufenden Schlitzen 22 erweitert, so daß die Rücklaufsperre 21 von einer schmalen, stegförmigen Wandung 23 des Gehäuses gebildet wird und dadurch ihre Federeigenschaft erhält.

Bei dem gezeigten Ausführungsbeispiel weist die Kolbenstange 5 an der der Zahnleiste 10 gegenüberliegenden Seite eine weitere Zahnleiste 24 auf, die jedoch eine andere Zahnteilung besitzt und folglich jeder einzelne Zahn zu einem anderen Hub als die Zähne an der Zahnleiste 10 führen. Ferner ist die Kolbenstange versetzt zu den Zahnleisten 10, 24 mit Abflachungen 25 versehen, die nach Verdrehen der Kolbenstange 7 um ihre eigene Achse ein Rückführen der Kolbenstange aus der in Figur 2 gezeigten Endposition in die Ausgangslage gestatten, bei der sich der Kolben 4 unterhalb des oberen Abschlusses 3 des Gehäuses 1 befindet und das Gehäuse 1 mit Teig gefüllt werden kann. Schließlich sind an der Kolbenstange eine der Anzahl der Zahnleisten 10, 24 entsprechende Anzahl von achsparallelen Rippen 26 angeformt, die in entsprechende achsparallele Führungsnuten 27 eingreifen und die jeweils der Schubklinke 11 gegenüber eingestellte Zahnleiste in ihrer Position halten, die Kolbenstange also gegen Verdrehen sichern.

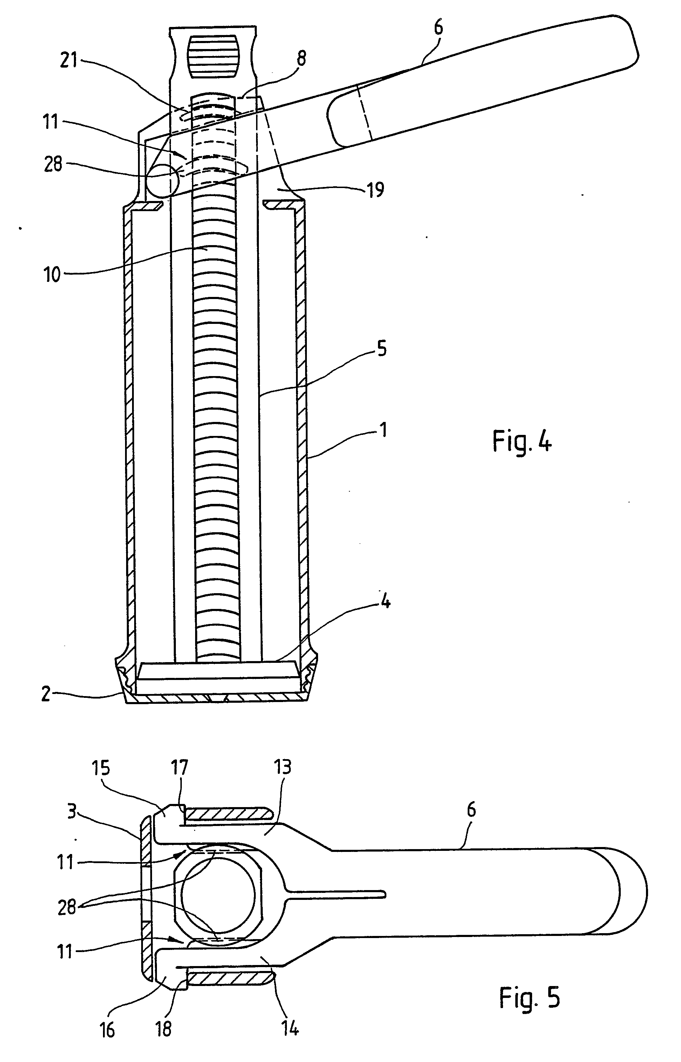

Die Ausführungsform gemäß Figur 4 und 5 unterscheidet sich von der gemäß Figur 2 und 3 im wesentlichen nur dadurch, daß die Kolbenstange an gegenüberliegenden Seiten je eine gleiche Zahnleiste 10 aufweist und die Schubklinken 11 an den einander zugekehrten Innenseiten der Gabelschenkel 13, 14 in Form nach unten weisender Leisten 28 angeordnet sind. In diesem Fall weisen die Gabelschenkel 13, 14 an den Lagerzapfen 15, 16 ein etwas größeres Axialspiel auf, um das Ausfedern der Leisten 28 zu gestatten. Ferner ist jeder Zahnleiste 10 eine Rücklaufsperre 21 zugeordnet, die an gegenüberliegenden Seiten an der Öffnung 8 ausgebildet sind.

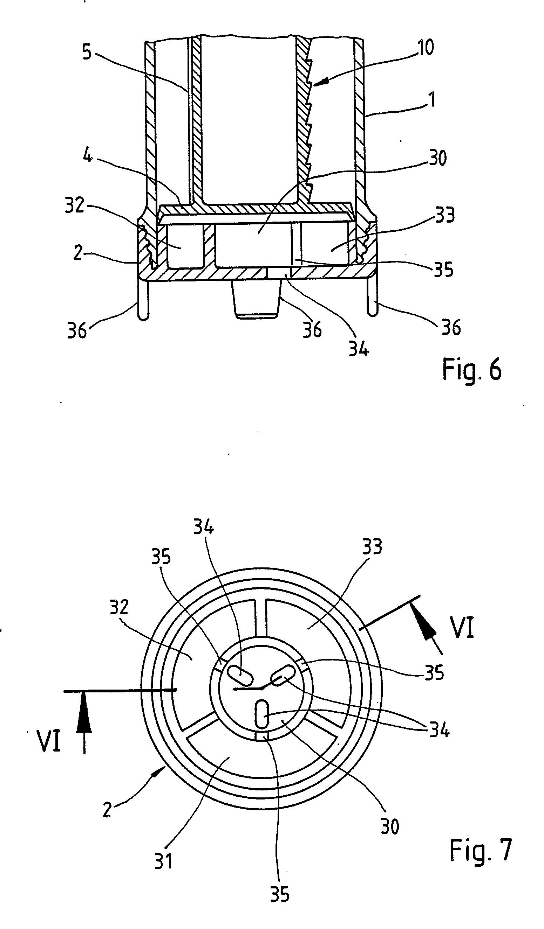

In Figur 6 und 7 ist eine abgewandelte Ausführung des Mundstücks 2 zum Herstellen dekorativen Gebäcks gezeigt. Das zylindrische Mundstück weist eine gewisse Höhe auf und besitzt beim gezeigten Ausführungsbeispiel vier nach oben offene Kammern 30 bis 33, von denen die zentrale zylindrische Kammer 30 die Austrittsöffnungen 34 für den Teig aufweist, während die die Kammer 30 umgebenden Kammern 31, 32, 33 nach unten geschlossen und über Queröffnungen 35 in der jeweiligen Trennwand mit der zentralen Kammer 30 verbunden sind. In die Kammern 31, 32, 33 wird ein anderer, z. B. andersfarbiger Teig eingefüllt als in das Gehäuse 1, so daß beim Auspressen der Hauptteigmasse durch die Kammer 30 jeweils eine dosierte Menge Teig aus den Nachbarkammern 31, 32 und 33 dem Teigstrang zugeführt wird.

Das Mundstück 2 weist schließlich wenigstens drei Füße 36 auf, mittels der das Gerät auf eine Unterlage, z. B. ein Backblech, aufgestellt werden kann und die die für das Austreten des Teigs notwendige Distanz gegenüber der Unterlage schaffen.

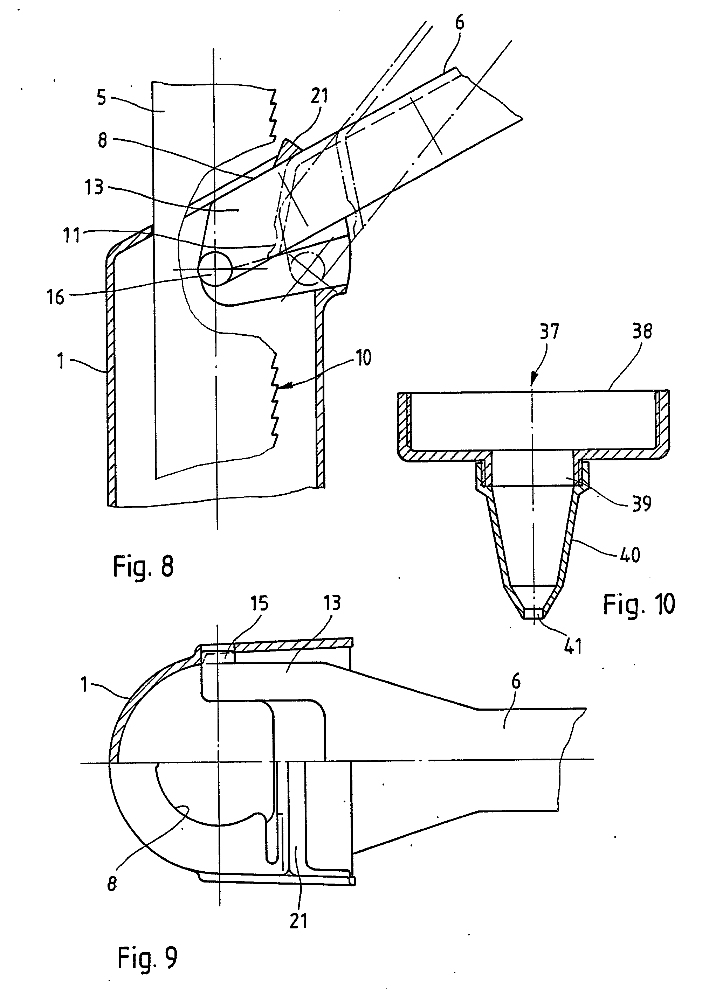

Bei der Ausführungsform gemäß Figur 8 und 9 ist das Gehäuse 1 an seiner oberen Stirnseite etwas anders gestaltet. Die Kolbenstange 5 durchgreift auch hier wieder eine Öffnung 8 des Gehäuses. In eine Zahnleiste 10 der Kolbenstange 5 greift der Stoßhebel 6 mit seiner Schubklinke 11 ein. Der Stoßhebel 6 ist mit den Lagerzapfen 15, 16 in den Lageröffnungen 17, 18 des Gehäuses 1 schwenkbar gelagert. Bei dieser Ausführungsform sind an den Gabelschenkeln 13, 14 und/oder an der Innenseite des Gehäuses in der Bewegungsbahn der Gabelschenkel Vorkehrungen getroffen, z. B. Anlaufflächen od. dgl. angeordnet, die beim Hochziehen des Stoßhebels in die höchste Stellung die Lagerzapfen 15, 16 aus den Lageröffnungen 17, 18 freisetzen. Dies kann beispielsweise durch federndes Nachgeben der gegenüberliegenden Gehäusewandungen oder - nach Verdrehen der Kolbenstange -durch Einfedern der Gabelschenkel 13, 14 geschehen, so daß der Stoßhebel 6 aus dem Gehäuse 1 entfernt werden kann (strichpunktierte Stellung in Figur 8 und Figur 9).

Figur 10 zeigt eine Garnierdüse 37, die beim wiedergegebenen Ausführungsbeispiel aus einem Mundstück 38 mit einer Austrittsöffnung 39 und einer aufgesetzten Düse 40 mit der eigentlichen Düsenöffnung 41 besteht. Die Garnierdüse kann entweder unmittelbar auf die Stirnseite des Gehäuses oder auf eines der zuvor beschriebenen Mundstücke aufgesetzt werden.

**Ansprüche**

1. Vorrichtung zur portionsweisen Abgabe von pastösen Massen, z. B. von Teig zur Herstellung von Gebäck, bestehend aus einem zylindrischen Gehäuse mit einem Mundstück am unteren Ende, einem im Gehäuse schrittweise verschieblichen Kolben mit einer das Gehäuse an der oberen Stirnseite durchgreifenden Kolbenstange mit wenigstens einer Zahnleiste, einem im Bereich der oberen Stirnseite des Gehäuses an einer horizontalen Achse schwenkbar gelagerten, die Kolbenstange mit einem Gabelkopf umgreifenden Stoßhebel, einer von diesem betätigten, in die Zahnleiste federnd eingreifenden Schubklinke und einer am Gehäuse angeordneten Rücklaufsperre für die Kolbenstange, dadurch gekennzeichnet, daß der aus Kunststoff bestehende Stoßhebel (6) an den beiden Schenkeln (13, 14) des Gabelkopfs je einen einstückig angeformten, nach außen weisenden Lagerzapfen (15, 16) aufweist, die beide in je eine Lageröffnung (17, 18) des Gehäuses (1) eingreifen und nach Einsetzen der Kolbenstange (5) zwischen die Gabelschenkel (13, 14) in ihrer Lagerposition gehalten sind.

2. Vorrichtung nach Anspruch 1, dadurch gekennzeichnet, daß der aus Kunststoff bestehende Stoßhebel (6) wenigstens eine einstückig angeformte Schubklinke (11) aufweist, die in den von dem Gabelkopf des Stoßhebels (6) umgrenzten Freiraum hineinragt.

3. Vorrichtung nach Anspruch 2, dadurch gekennzeichnet, daß die Schubklinke (11) an dem Stoßhebel (6) zwischen den beiden Gabelschenkeln (13, 14) angeformt und als schräg nach unten weisende Federnase (12) ausgebildet ist.

4. Vorrichtung nach Anspruch 1 oder 2, dadurch gekennzeichnet, daß an der Innenseite jedes Gabelschenkels (13, 14) eine Schubklinke (28) angeformt ist, und daß an der Kolbenstange (5) zwei diametral angeordnete Zahnleisten (10) vorgesehen sind.

5. Vorrichtung nach Anspruch 4, dadurch gekennzeichnet, daß die federnden Gabelschenkel (13, 14) in ihren Schwenklagern (15 bis 18) ein ausreichendes Axialspiel aufweisen, um beim Rückführen des Stoßhebels (6) die Schubklinken (28) über die Zahnleiste gleiten zu lassen.

6. Vorrichtung nach einem der Ansprüche 1 bis 5, dadurch gekennzeichnet, daß die Rücklaufsperre als am Gehäuse (1) einstückig angeformte Nase (21) ausgebildet ist.

7. Vorrichtung nach einem der Ansprüche 1 bis 6, dadurch gekennzeichnet, daß die Kolbenstange (5) um ihre Achse verdrehbar ist.

8. Vorrichtung nach einem der Ansprüche 1 bis 7, dadurch gekennzeichnet, daß die Kolbenstange (5) wenigstens zwei Zahnleisten (10, 24) mit unterschiedlicher Zahnteilung und zwischen diesen glatte Flächen (25) für die Rückführung der Kolbenstange (5) in ihre Ausgangslage aufweist.

9. Vorrichtung nach einem der Ansprüche 1 bis 8, dadurch gekennzeichnet, daß das Gehäuse (1) eine achsparalle Führung (26, 27) für die Kolbenstange (5) aufweist, die zugleich eine Drehsicherung für die Kolbenstange (5) bildet.

10. Vorrichtung nach einem der Ansprüche 1 bis 9, dadurch gekennzeichnet, daß die Führung aus einer an der Kolbenstange (5) angeordneten achsparallelen Rippe (26) und einer am Gehäuse (1) im Bereich deren oberer Stirnseite (3) angeordneten Nut (27) gebildet ist.

11. Vorrichtung nach einem der Ansprüche 1 bis 10, dadurch gekennzeichnet, daß bei mehreren Zahnleisten (10, 24) mit unterschiedlicher Zahnteilung je eine Rippe (26) an der Kolbenstange (5) für die Positionierung einer der Zahnleisten in ihrer Betriebsstellung vorgesehen ist.

12. Vorrichtung nach einem der Ansprüche 1 bis 11, dadurch gekennzeichnet, daß die Lagerzapfen (15, 16) in der oberen Stellung des Stoßhebels (6) durch Einfedern der Gabelschenkel (13, 14) und/oder durch Ausfedern der Wandung des Gehäuses (1) aus den Lager öffnungen (17, 18) ausrastbar sind und der Stoßhebel (6) vom Gehäuse (1) lösbar ist.

13. Vorrichtung nach einem der Ansprüche 1 bis 12, dadurch gekennzeichnet, daß nach Lösen des Stoßhebels (6) vom Gehäuse (1) die Vorrichtung als Garnierspritze verwendbar ist.

14. Vorrichtung nach einem der Ansprüche 1 bis 13, dadurch gekennzeichnet, daß die Kolbenstange (5) als Kunststoffrohr ausgebildet ist.

15. Vorrichtung nach einem der Ansprüche 1 bis 14, dadurch gekennzeichnet, daß das Mundstück (2) als kurzes zylindrisches Bauteil ausgebildet ist und mehrere zum Innenraum des Gehäuses (1) offene Kammern (30 bis 33) aufweist, von denen eine im Zentrum angeordnete Kammer (30) die Austrittsöffnung(en) (34) für die im Gehäuse untergebrachte pastöse Masse aufweist, während die um die zentrale Kammer angeordneten weiteren Kammern (31, 32, 33) zur Aufnahme von Massen anderer Farbe oder anderer Art dienen und entweder über Queröffnungen (35) mit der zentralen Kammer (30) verbunden sind oder unmittelbar nach außen weisende Austrittsöffnungen aufweisen.

16. Vorrichtung nach einem der Ansprüche 1 bis 15, dadurch gekennzeichnet, daß an dem Gehäuse (1) statt des Mundstücks (2) eine Garnierdüse befestigbar ist.

17. Vorrichtung nach einem der Ansprüche 1 bis 15, dadurch gekennzeichnet, daß an dem Mundstück (2) eine an die Austrittsöffnung(en) (34) anschließende Garnierdüse befestigbar ist.

Fig. 1

EP 0 309 977 A2

Fig. 2

Fig. 3

Fig. 4

Fig. 5

5
10
1
4
30
32
33
2
35
36
36
34
36

Fig. 6

34
35
33
32
VI
35
34
VI
30
2
31
35

Fig. 7

Fig. 8

Fig. 9

Fig. 10